# EUROPEAN PATENT APPLICATION

(11) **EP 1 004 431 A2**
(43) Date of publication of application: **31.05.2000**
(21) Application number: 99309265.9
(22) Date of filing: 22.11.1999
(51) Int. Cl.: B30B 15/28, F16P 5/00, B30B 1/14

(54) **Cam mechanism and pressing apparatus**

(30) Priority: 25.11.1998 JP 33355698
(71) Applicant: Morito Co., Ltd., Osaka 541-0054 (JP)
(72) Inventor: Miyazaki,Mitsuru, Osaka 545-0035 (JP); Fujita,Keiji, Osaka 581-0845 (JP)
(74) Representative: Laight, Martin Harvey

(57) **Abstract**

A cam mechanism is used as a safety apparatus for a pressing apparatus that stops the pressing operation in an emergency by detecting the existence of a foreign object through a change in the operation of the press cylinder itself without adding a separate sensor. In the cam mechanism a cam follower (30) engages an endless guide groove (13) to impart a reciprocal movement to a follower link (31). The guide groove (13) comprises a restraining region (14) in which the cam follower (30) is guided in a restrained condition and a floating region (15) in which the cam follower (30) is guided in such a way that it can float freely in the direction that the follower link (31) reciprocates.

## Description

The present invention relates to a cam mechanism, and to a pressing apparatus equipped with a safety apparatus, and in particular, a pressing apparatus equipped with such a safety apparatus that stops the pressing operation in an emergency such as when a finger or other foreign object enters the range of operation of the pressing apparatus. The cam mechanism may be used in such an apparatus.

A variety of pressing machines such as an eyelet-stamping machine or an eyelet-attaching machine for automatically attaching eyelets, buttons or snap fasteners on a sheet material such as a cloth, leather or synthetic sheet material are known. An example is an eyelet-stamping machine that tightens and fastens an eyelet by using the driving force of a motor, etc., to rotate a positive cam via an intermittent clutch, imparting a reciprocal movement to a cam follower engaged with a cam groove and lowering a press cylinder mounted on a power-assisting mechanism such as a toggle joint mechanism.

When tightening and fastening an eyelet, etc., on a sheet material using the eyelet-stamping machine as described above, the worker needs to position the sheet material by hand and keep pressing it until the attachment is completed. This is dangerous as evidenced by the occurrence of accidents in which a worker inadvertently starts the pressing apparatus with his/her fingers under the press cylinder and has his/her fingers crushed by the press cylinder.

A variety of safety apparatus designed to stop the pressing operation in an emergency have been proposed in order to prevent such accidents. In all of these emergency-stop means a sensing means that is separate from the press cylinder is established near the press cylinder and examines the range of operation of the press cylinder before the press cylinder moves down, so that if a foreign object such as a human finger is detected, a solenoid, for example, disengages a clutch and immediately stops the pressing operation.

The reason that the conventional emergency-stop method used in a pressing apparatus is equipped with a separate sensor is that it is not possible to equip a mechanism that transmits the driving force of a motor, etc., to the press cylinder together with an external-blocking-force-sensing apparatus for detecting a foreign object such as a finger that prevents the lowering of the press cylinder.

Because the conventional pressing apparatus uses a positive cam for the transmission of the driving force to ensure a prescribed movement at all stages of the stroke, and the press cylinder is expected to perform a prescribed movement with a working force by means of the positive cam at all stages of the stroke, it is impossible to detect the occurrence of an external blocking force caused by the existence of a foreign object that blocks the operation of the press cylinder.

The conventional pressing apparatus equipped with an emergency-stop means and a sensing means established separately from the press cylinder, however, has several inherent problems, such as an increased cost and more complicated structure of the product attributable to the attachment of an expensive sensing means, low working efficiency attributable to the fact that safety is confirmed by the sensing means every time a pressing operation is performed, and impaired workability because the separate sensing means obstructs the inspection or replacement of the dies.

An object of the present invention, in its preferred form, is to provide a cam mechanism that makes it possible to detect the existence of a foreign object not through the attachment of a separate sensing means but through a change in the operation of the press cylinder itself and that can be used as a safety apparatus for a pressing apparatus that stops the pressing operation in an emergency.

Another object of the present invention, in a preferred form, is to provide a pressing apparatus that is equipped with said safety apparatus incorporating the emergency-stop means using the cam and that is capable of ensuring the safety of the pressing operation while avoiding any increased product cost attributable to the attachment of an expensive sensing means and a more complicated structure.

According to the present invention there is provided a cam mechanism in which a cam follower engages an endless guide groove to impart a reciprocal movement to a follower link coupled to the cam follower; characterised in that said guide groove comprises a restraining region in which the cam follower is guided in a restrained condition and a floating region in which the cam follower is guided in such a way that it has an extent of unrestrained movement in the direction that the follower link reciprocates.

It is particularly preferred that the cam follower when in the floating region of the guide groove is biased towards contact with one side of the guide groove. In a preferred form the guide groove is defined between an inner cam surface formed on an inner cam and an outer cam surface formed on an outer cam. In one convenient arrangement the inner cam has a working part at which the radius of the inner cam is largest, and the cam follower when in the floating region is biased towards contact with the outer cam surface; in which the floating region of the guide groove is established between the inner cam surface of the inner cam and the outer cam surface of the outer cam, in a first part of the travel of the working part; and in which in a later part of the travel of the working part, a radius of the outer cam surface diminishes so as to return the cam follower towards a centre of rotation of the cams.

There may be provided such a cam mechanism adapted for intermittent rotary movement, in which an intermittently rotating clutch, which transmits a driving force by intermittent rotation, is coupled with the cams, and in which when the cam follower reaches a prescribed position while urged against the outer cam surface, an emergency stop means of the rotating clutch is released to allow the driving force to be transmitted, whereas when the cam follower does not reach the prescribed position, the emergency stop means of the intermittently rotating clutch is not released, so that further rotation is immediately stopped.

The invention has particular application when the cam mechanism is used in a pressing apparatus. Such a pressing apparatus may include a press cylinder for performing a pressing operation, linked to a cam mechanism as set out above, by a linkage such that the said driving force rotates the cams via the intermittently rotating clutch and activates the press cylinder to perform the press operation, in which when the cam follower is in the floating region a power is applied to the linkage to move the press cylinder to a prescribed position and the emergency stop means of the intermittently rotating clutch coupled with the linkage is released to apply a pressing force to the press cylinder, whereas when the press cylinder does move to the prescribed position because of an external blocking force, the emergency stop means of the intermittently rotating clutch is not released, and the movement of the press cylinder is stopped.

There will now be set out a number of further preferred or optional features of the invention, together with advantages which may be obtained.

Generally, the press cylinder of a pressing apparatus does not require a large working force until it reaches the bottom dead point. The press cylinder needs a sufficient working force for tightening and fastening only after it makes contact with the part to be attached. Therefore the structure of a desirable grooved cam may be such that in the range where a large working force is necessary a working force is applied to a cam follower of the grooved cam whereas in the range where a large working force is not required the movement of the cam follower is not restricted, and when there is a foreign object such as a finger under the press cylinder the movement of the press cylinder is blocked so that the existence of the foreign object is detected.

The basic mechanism of the grooved cam of the present invention, at least in preferred forms, is that in this grooved cam in which a cam follower engages an endlessly formed guide groove to impart a reciprocal movement to a follower link, said guide groove comprises a restraining range in which the cam follower is guided in a restrained condition and a floating range in which the cam follower is guided in such a way that it can float freely in the direction that the follower link reciprocates.

In another embodiment, the cam follower in the floating range of the guide groove makes contact with an external cam surface, rather than with the surface of an internal cam which forms the guide groove together with the external cam, by means of a pressing and energising means.

In yet another embodiment, the floating range in which the cam follower can float freely in the direction that the follower link reciprocates, is established in the first part of the travel of the working part, i.e., the part of the internal cam where the radius is the largest, between the internal cam and the external cam, whereas in the latter part of the travel of the working part, the radius of the external cam diminishes so as to return the cam follower towards the centre of the grooved cam.

The basic mechanism of a grooved cam for intermittent rotary movement in accordance with some embodiments of the invention is that an intermittently rotating clutch, which transmits the driving force in the form of an intermittent rotation, is interlocked with the grooved cam formed of the endlessly formed guide groove comprising the restraining range and the floating range, and that when the cam follower in the floating range of the guide groove is pushed by means of a pressing and energising means to the external cam surface, rather than to the surface of the internal cam which forms the guide groove together with the external cam, and moves to a prescribed position, an emergency stop means of the intermittently rotating clutch interlocked via a mechanical or electrical means with the cam follower is released to transmit the driving force to the grooved cam, whereas when the cam follower does not move to the prescribed position, the emergency stop means of the intermittently rotating clutch is not released, so the rotation of the grooved cam is immediately stopped.

The basic mechanism of the pressing apparatus equipped with the safety apparatus employing the emergency-stop means incorporating the grooved cam is that in the pressing apparatus the grooved cam and a press cylinder are linked by a linkage, and the driving force rotates the grooved cam via the intermittently rotating clutch, thereby activating the press cylinder to perform the press operation, characterised in that the guide groove is formed of the restraining range and the floating range, and when the cam follower is in the floating range and the pressing and energising means applies power to the linkage to move the press cylinder to a prescribed position, the emergency stop means of the intermittently rotating clutch interlocked with the linkage via a mechanical or electrical means is released to apply a pressing force to the press cylinder, whereas when the press cylinder does not move to the prescribed position because of an external blocking force, the emergency stop means of the intermittently rotating clutch is not released, so the movement of the press cylinder is immediately stopped.

According to the present invention in some forms, because the grooved cam mechanism has a guide groove comprising the restraining range in which the cam follower is guided in a restrained condition and the floating range in which the cam follower is guided in such a way that it can float freely in the direction that the follower link reciprocates, a working force is applied to the cam follower in the range where a working force is necessary, whereas in the range where a working force is not necessary the floating range is formed, allowing the cam follower to float freely. When there is a foreign object such as a finger in the range of operation of the press cylinder, the press cylinder does not move, making it possible to detect the existence of the foreign object and to use this mechanism as the safety apparatus of a pressing apparatus that stops the pressing operation in an emergency.

According to the grooved cam mechanism of a preferred embodiment, the cam follower in the floating range of the guide groove makes contact with an external cam surface, rather than with the surface of an internal cam which forms the guide groove together with the external cam, by means of a pushing cam, thereby moving the press cylinder linked to the cam follower via a linkage to a prescribed position. When there is a foreign object such as a finger in the range of operation of the press cylinder, the press cylinder does not move, making it possible to detect the existence of the foreign object and to use this mechanism as the safety apparatus of a pressing apparatus that stops the pressing operation in an emergency.

According to the grooved cam mechanism of a preferred embodiment, the floating range is established between the internal cam and the external cam in the first part of the travel of the working part, whereas in the latter part of the travel of the working part the radius of the external cam diminishes. Within the floating range, the press cylinder is lowered through the use of a pressing and energising means, etc., and a large working force is generated by the working part of the grooved cam. When there is a foreign object such as a finger within the range of operation, the movement of the press cylinder is blocked, indicating the existence of the foreign object. In this way, this mechanism can be used as the safety apparatus of a pressing apparatus that stops the pressing operation in an emergency.

According to the grooved cam mechanism of the present invention in a preferred form, the grooved cam is interlocked with an intermittently rotating clutch. When the cam follower in the floating range is energised and moved to the prescribed position, the emergency-stop means of the intermittently rotating clutch interlocked via a mechanical or electrical means with the cam follower is released to transmit the driving force to the grooved cam, whereas when the cam follower does not move to the prescribed position, the emergency-stop means of the intermittently rotating clutch is not released, so the rotation of the grooved cam is immediately stopped. In this way, if a foreign object such as a finger enters the range of operation of the press cylinder and blocks the movement of the cam follower, it is possible to detect the blockage and stop the rotation of the grooved cam in an emergency. As such, this mechanism can be used as the safety apparatus of a pressing apparatus that stops the pressing operation in an emergency.

According to the pressing apparatus of the present invention in a preferred form, when the press cylinder moves to the prescribed position, the emergency-stop means of the intermittently rotating clutch that is interlocked with the linkage via a mechanical or electrical means is released to impart a pressing force to the press cylinder. When the press cylinder does not move to the prescribed position because of an external blocking force, the emergency-stop means of the intermittently rotating clutch is not released, so the movement of the press cylinder is immediately stopped. In this way, the pressing apparatus can be equipped with a safety apparatus that stops the pressing operation in an emergency by detecting the existence of a foreign object through a change in the operation of the press cylinder itself.

As explained above, it is possible to provide a grooved cam mechanism that detects the existence of a foreign object through a change in the operation of the press cylinder itself, without adding a separate sensing means, and stops the pressing operation in an emergency so that it can be used as the safety apparatus of a pressing apparatus. At the same time, it is possible to provide a pressing apparatus that is equipped with the safety apparatus employing the emergency-stop means incorporating the grooved cam mechanism and is capable of ensuring the safety of the pressing operation while avoiding the increased product costs that accompany the attachment of an expensive sensing means and a more complicated structure.

Embodiments of the invention will now be described by way of example with reference to the accompanying drawings, in which:
FIG. 1 is a front view of an eyelet-stamping machine according to Example 1 of the present invention;
FIG. 2 is a cross sectional view taken along line A-A of FIG. 1;
FIG. 3 is a cross sectional view taken along line B-B of FIG. 1;
FIG. 4 is an enlarged side view of FIG. 2 showing a grooved cam, links and a press cylinder, in which the press cylinder is at its top dead point;
FIG. 5 is a side view of the same grooved cam, links and press cylinder as those shown in FIG. 4 but immediately after the grooved cam started rotation;
FIG. 6 is a side view of an intermittently rotating clutch in an idling condition, showing a driving external wheel, a driven internal wheel and its stopper plate;
FIG. 7 is a side view of the same intermittently rotating clutch immediately after the machine was started, showing the same driving external wheel, driven internal wheel and its stopper plate;
FIG. 8 is a side view of the same intermittently rotating clutch during an emergency stop, showing the same driving external wheel, driven internal wheel and its stopper plate;
FIG. 9 is a side view showing the grooved cam and the intermittently rotating clutch immediately after the machine was started;
FIG. 10 is a side view showing the grooved cam and the intermittently rotating clutch after a safety check;
FIG. 11 shows the grooved cam and the intermittently rotating clutch after an emergency stop;
FIG. 12 is a cross sectional view of an eyelet-stamping machine according to Example 2 of the present invention;
FIG. 13 is a cross sectional view of an eyelet-stamping machine according to Example 3 of the present invention;
FIG. 14 is a cross sectional view of an eyelet-stamping machine according to Example 4 of the present invention.

### Example 1

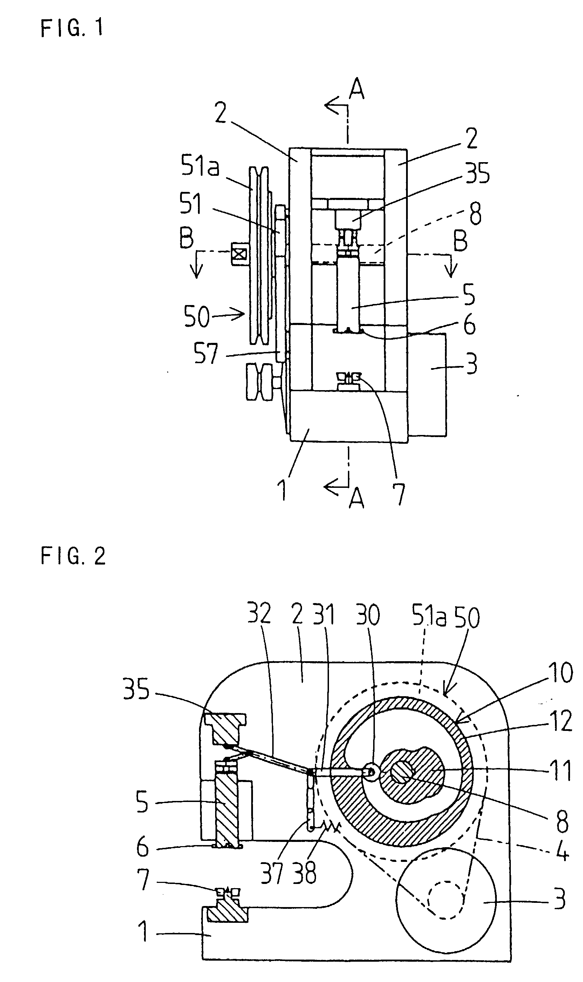

An eyelet-stamping machine according to the first embodiment of the present invention will now be explained with reference to FIGS. 1 to 11.

As shown in FIGS. 1 and 2, a frame 2 (also referred to as a frame-supported apparatus base 2) is constructed continuously from the left and right sides of a base 1. Inside the apparatus base 2, an apparatus-housing space is established, where a main drive shaft 8 on which a grooved cam 10 is axially mounted is axially supported horizontally. Below the main drive shaft 8 is established a motor 3 which transmits a driving force to an intermittently rotating clutch 50 via a drive belt 4. The grooved cam 10 and a press cylinder 5 equipped with an upper die 6 are linked via a linkage. The whole assembly is covered by an apparatus cover (not shown). When an activating switch is turned on, the intermittently rotating clutch 50 is engaged, and after it is confirmed that the status is in a safe condition, an emergency-stop means of the intermittently rotating clutch 50 linked with the grooved cam 10 via a mechanical means is released, and the driving force of the motor 3 rotates the grooved cam 10 through one cycle, moving the press cylinder 5 up and down and tightening and fastening the eyelet onto a sheet material.

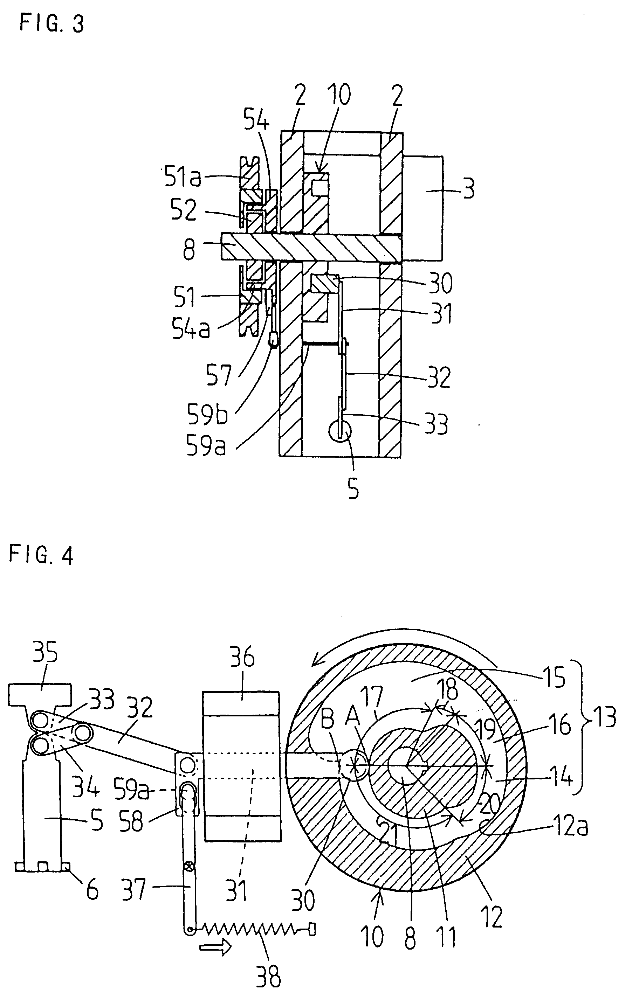

As shown in FIG. 4, an internal cam 11 and an external cam 12 form an endless guide groove 13 on the grooved cam 10. The guide groove 13 comprises a restraining region 14 (also referred to as a restraining range 14) where a cam follower 30 that engages with the guide groove is guided in a restrained condition; a floating region 15 (also referred to as a floating range 15) where the cam follower 30 is guided while floating freely in the direction that a follower link 31 reciprocates; and an action initiating region 16 (also referred to as an action initiating range 16). The profile of the internal cam 11 is as follows. Point A, where the radius vector is at its smallest, corresponds to the upper dead point of the press cylinder 5. Starting from point A, the part from A to an angle of 110° is a floating part 17 which has a constant radius vector and does not impart any working force on the cam follower 30. The part from 110° to 125° is an action-initiating part 18 over which the radius vector increases steeply and which starts imparting a working force on the eyelet. The part from 125° to 180° is a working part 19 over which the radius vector further increases gradually to its maximum and the press cylinder reaches the bottom dead point where it acts on the eyelet. The part from 180° to 200° is a tightening and fastening part 20 over which the radius vector is maintained at its maximum and which tightens and fastens the eyelet completely. And the part from 200° to 360° is a returning part 21 over which the radius vector gradually decreases to its minimum.

The profile of the external cam 12 is as follows. For the sake of explanation, the position opposite the point A of the internal cam 11 is referred to as point B. The radius vector of the external cam is at its smallest at point B, where the width of the guide groove 13 corresponds to the diameter of the cam follower 30. Starting from point B, at an angle 13° from point B, a steep indentation is formed so that the radius vector reaches its maximum. This maximum radius vector is maintained from 13° to 200°, and from 200° to 360° the radius vector gradually diminishes while maintaining a constant width of the guide groove 13 between the external and internal cams.

Therefore, the guide groove 13 corresponding to the floating part 17, i.e., from point A to 110°, where the radius vector of the internal cam 11 remains the same, is the floating range 15 where the cam follower 30 moves freely, the area of the guide groove 13 corresponding to between 125° and 360° is the restraining range 14 where the cam follower 30 is guided in a restrained condition, and the area of the guide groove 13 from 110° to 125° is the action-initiating range 16.

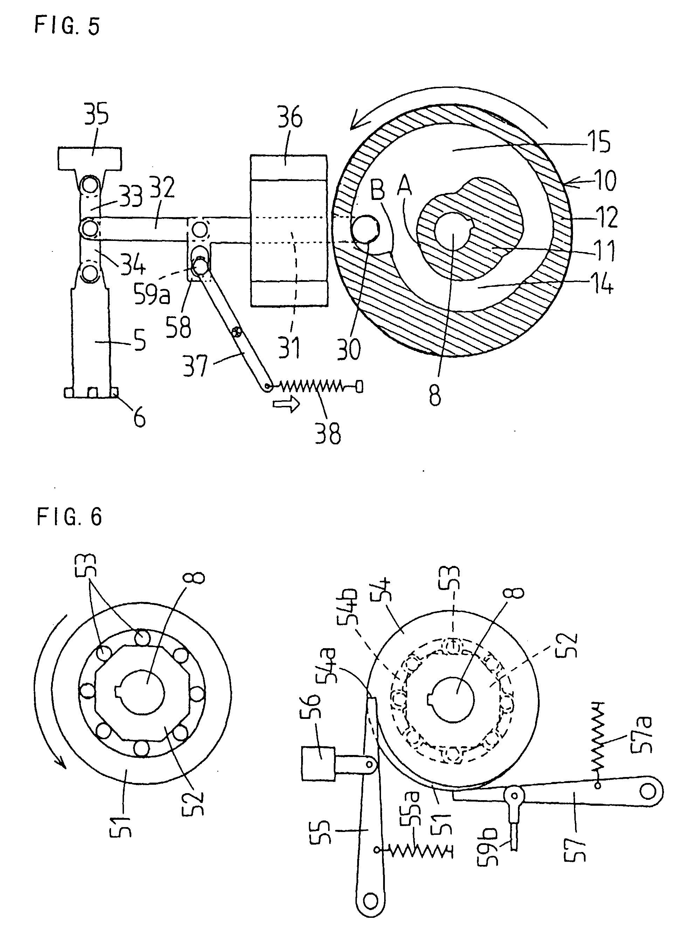

The follower link 31 linked to the cam follower 30 engaging the grooved cam 10 is controlled by a follower-link-receiving slider 36 which acts to convert the rotary motion of the grooved cam 10 into the reciprocal movement of pushing and pulling. The follower link 31 is also linked with a press-cylinder-lowering lever 37 energised by a press-cylinder-lowering spring 38, and constantly pushes the follower link 31 in the direction of pushing. Accordingly, as shown in FIG. 5, the cam follower 30 is constantly in contact with the external cam surface 12a even when it is in the floating range 15 of the grooved cam 10, but when an external force countering the energising force of the press-cylinder-lowering spring 38 acts on the follower link 31, the cam follower 30 leaves the external cam 12 and is pushed back to the floating range 15. The resilient force of the press-cylinder-lowering spring 38 can be just strong enough to resist the frictional force generated in the linkage and lower the press cylinder 5.

As shown in FIGS. 3 and 4, the follower link 31 is mechanically linked to a safety-lever link 58 which is linked to a safety lever 57 for stopping the intermittently rotating clutch 50 described below via a first rod 59a and a second rod 59b. The intermittently rotating clutch 50 and the safety lever 57 are engaged and disengaged according to the travel of the follower link 31.

As shown in FIGS. 2 and 4, the press cylinder 5 for tightening and fastening the eyelet has an upper die 6 at its bottom. On the base 1, which opposes the press cylinder 5, a lower die 7 is firmly established. The press cylinder 5 is fastened to one end of a toggle joint comprising a second toggle link 33 and a third toggle link 34 pin-connected thereto, and is supported in such a way as to allow it to reciprocate in the vertical direction. The other end of the toggle joint is fastened to a toggle-link-fastening-and-supporting base 35. The toggle joint is also linked to the follower link 31 via a first toggle link 32. As shown in FIGS. 4 and 5, the follower link 31 is energised in the direction of pushing by the press-cylinder-lowering lever 37, therefore when the cam follower 30 is in the floating space and no load is applied on the press cylinder 5, the press cylinder 5 is positioned at the bottom dead point.

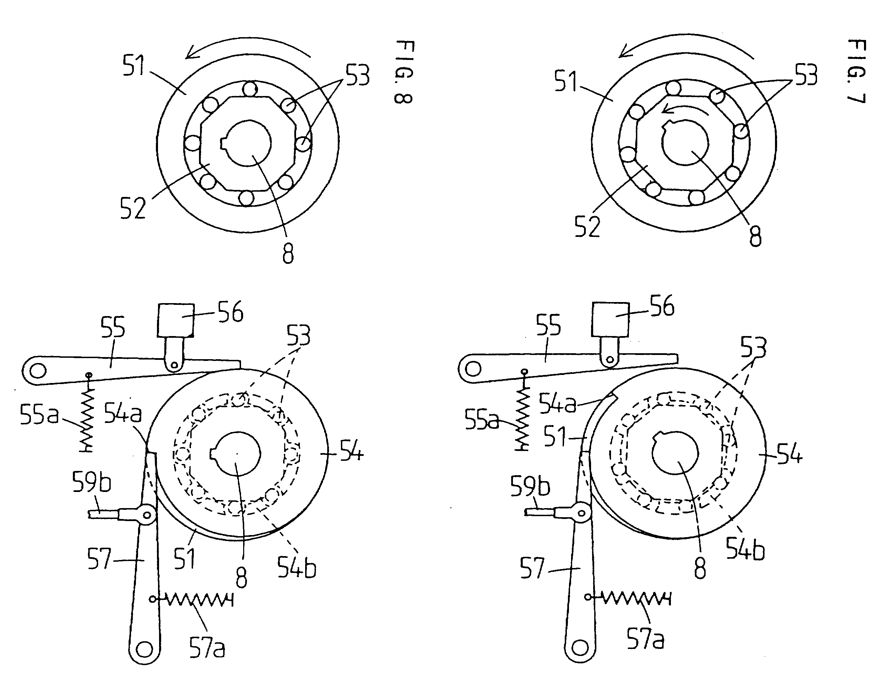

As shown in FIGS. 3 to 6, the intermittently rotating clutch 50, which transmits the continuous revolution of the motor 3 to rotate the grooved cam 10 for just one cycle and moves the press cylinder 5 for one stroke, is engaged with a flywheel 51a, which has a pulley on its circumferential surface, via the driving external wheel 51. The driven internal wheel 52, which has an octagonal cross section, is flexibly fitted inside the driving external wheel 51. Between the internal surface of the driving external wheel 51 and the external surface of the driven internal wheel 52 axially mounted on the main drive shaft 8, a wedge-shaped space is maintained, within which a number of cam rollers 53 are arranged. When the cam rollers 53 are pushed into the narrow part of the wedge-shaped space, the driving external wheel 51, the driven internal wheel 52 and the cam rollers 53 are engaged with one another and transmit the driving force. The control plate 54 for pushing the cam rollers 53 and engaging and disengaging the intermittently rotating clutch 50 is provided with a trip cam cage 54b integrated thereto (Figures 7 and 8). Other elements include a stop lever 55, which pushes/pulls the cam rollers 53 into/out of the narrow part by engaging/disengaging a step 54a of the control plate 54, and the safety lever 57.

The control plate 54 is pulled in the direction of rotation of the driving external wheel 51 by a return spring (not shown), therefore the trip cam cage 54b is energised in such a direction so as to push the cam rollers 53 into the ON condition. In the OFF condition, the tip of the stop lever 55 engages the step 54a established on the control plate 54, preventing the cam rollers 53 from being pushed in and leaving only the driving external wheel 51 to idle. As shown in FIG. 7, when a solenoid 56, which is activated by the activating switch, disengages the stop lever 55, the control plate 54 is pulled by the return spring and moves in the direction of rotation. Then the cam rollers 53 are engaged between the internal surface of the driving external wheel 51 and the driven internal wheel 52 and transmit the driving force of the motor to the driven internal wheel 52. At this time the control plate 54 rotates together with the wheels. As shown in FIG. 8, when the solenoid 56 is deactivated, the stop lever 55 is pulled by a stop-lever spring 55a and makes contact with the circumference of the control plate 54. When the step 54a of the control plate 54 co-rotating with the driven internal wheel 52 makes one turn and then makes contact with the stop lever 55 again, the trip cam cage 54b is pushed in the direction opposing the direction of rotation, disengaging the cam rollers 53. In this OFF condition, the driving external wheel 51 just idles and the driving force is not transmitted. The internal driven wheel 52, immediately stops at the moment the step 54a makes contact with the stop lever 55.

As shown in FIGS. 3, 6, 7 and 8, the safety lever 57 has the same shape as the stop lever 55, and its tip is energised by a safety-lever spring 57a and makes contact with the circumferential surface of the control plate 54. The safety lever 57 is also connected to the safety-lever link 58, which is mechanically linked to the follower link 31 via the first rod 59a and the second rod 59b. When the follower link 31 moves in the direction of pushing, the safety lever 57 is pulled in the direction of disengagement. At this time if the safety-lever link 58 does not pull the safety lever 57, the safety lever 57 makes contact with the step 54a of the control plate 54 and pushes the control plate 54 in the direction opposing the direction of rotation and disengages the cam rollers 53, cutting off the transmission of the driving force, and immediately stopping the rotation of the driven internal wheel 52 at its current position.

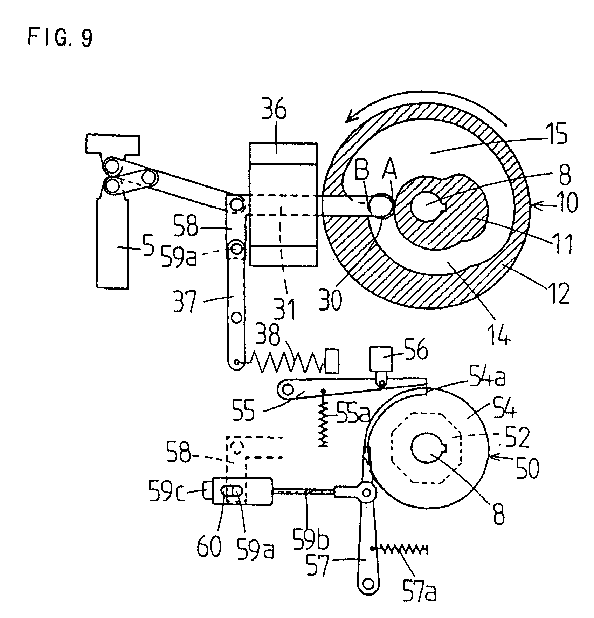

As shown in FIGS. 9 to 11, the stop lever 55 engages with the step 54a of the control plate 54 when the cam follower 30 engaging the grooved cam 10 is at point A on the internal cam 11, i.e., the position at which the press cylinder 5 is at its upper dead point. In other words, the press cylinder 5 is always stopped at its upper dead point. On the other hand, the safety lever 57 engages the step 54a of the control plate 54 at a position 90° advanced from the stop lever 55. At this position, the grooved cam 10 has turned 90°, and the cam follower 30 engaging the grooved cam 10 is in the floating range 15, so the press cylinder 5 is immediately stopped before the working force of the internal cam 11 acts on the press cylinder 5.

While the safety lever 57 and follower link 31 are linked via the safety-lever link 58, the first rod 59a and the second rod 59b as shown in FIGS. 3 and 9, the linkage between the first rod 59a and the second rod 59b is realised by the engagement of the first rod 59a with an elongated hole 60 formed at the end of the second rod 59b, while a certain amount of play is provided. Therefore the safety lever 57 is not disengaged from the control plate 54 unless the follower link 31 does not move more than a certain distance.

The tip of a screw 59c sticks into the elongated hole 60 in such a way that it can advance or retreat. The length of the elongated hole 60 is varied by advancing or retreating the screw 59c, and by doing so the amount of play can be adjusted. For example, the position of the screw 59c can be adjusted so that when the press cylinder 5 is more than 5 mm above the bottom dead point the safety lever 57 does not disengage from the step 54a of the control plate 54.

The eyelet-stamping machine according to Example 1 is used as follows. First the object to be attached with an eyelet is placed on the base 1 under the press cylinder 5 and the motor 3 is activated. When the activation switch is turned on, the solenoid 56 linked to the stop lever 55 of the intermittently rotating clutch 50 is activated, as shown in FIG. 7, to disengage the stop lever 55 from the step 54a formed on the control plate 54, the driving external wheel 51 and the driven internal wheel 52 are engaged via the cam rollers 53, and the driving force of the motor 3 is transmitted to the driven internal wheel 52, thereby rotating the grooved cam 10 axially mounted on the main drive shaft 8.

When the grooved cam 10 starts to rotate, the cam follower 30 in the grooved cam 10 shown in FIG. 9 advances into the floating range 15. Normally, when the follower link 31 is pushed by the energisation of the press-cylinder-lowering lever 37 and lowered until it touches the object to which an eyelet is to be attached, in other words, when the press cylinder 5 moves downward sufficiently to within 5 mm of the bottom dead point where there is no space for a finger F, etc., to be caught, it is assumed that safety is confirmed. Then the safety-lever link 58 linked to the follower link 31 pulls the first rod 59a and the second rod 59b linked to the safety lever 57 in the direction of disengagement as shown by the intermittently rotating clutch 50 in FIG. 9, and disengages the safety lever 57 from the control plate 54.

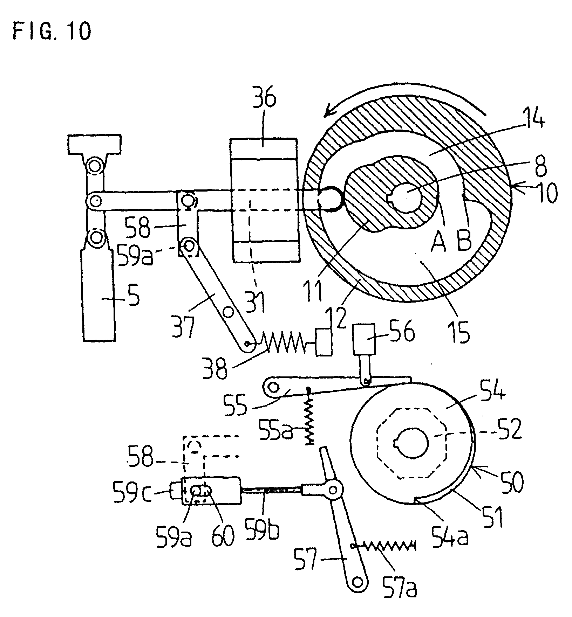

As explained above, when there is no foreign object such as a finger F under the press cylinder 5, the driven internal wheel 52 of the intermittently rotating clutch 50 continues its rotary motion and rotates the grooved cam 10 without being obstructed by the safety lever 57 as shown in FIG. 10, and as shown by the grooved cam 10 in FIG. 10, the cam follower 30 advances to the restraining range 14, where the internal cam 11 applies a working force to the cam follower 30 which in turn applies a tightening and fastening force to the press cylinder 5 and performs the eyelet tightening and fastening process.

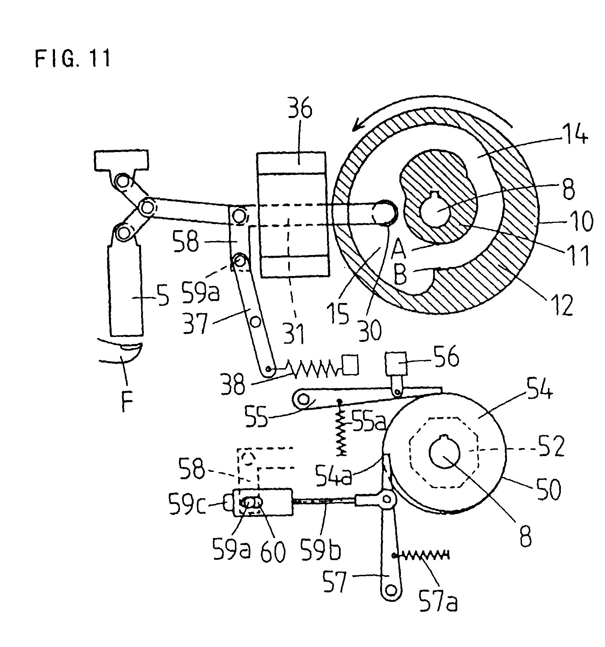

On the other hand, when there is a foreign object such as a finger F under the press cylinder 5 as shown in FIG. 11, it resists the energising force of the press-cylinder-lowering spring 38 and obstructs the lowering of the press cylinder 5. The press cylinder 5 is then stopped. The follower link 31 does not move by a prescribed amount in the direction of pushing but instead stops short. At this time, as shown by the intermittently rotating clutch 50 in FIG. 11, the safety lever 57 does not disengage from the control plate 54 but instead remains at the position where it touches the step 54a. In other words the safety lever 57 and the step 54a make contact with each other when the control plate 54 turns through 90°. Then the trip cam cage 54b moves the cam rollers 53 in the direction in which it disengages the clutch and cuts off the driving force from the driving external wheel 51. The rotary motion of the driven internal wheel 52 immediately stops at this position, and the rotary motion of the grooved cam 10 is also immediately stopped at 90°, thereby interrupting the tightening and fastening operation.

When the rotary motion of the grooved cam 10 immediately stops at 90°, as shown by the grooved cam 10 in FIG. 11, the cam follower 30 engaging the grooved cam 10 is in the floating range 15. At this time, the internal cam 11 does not transmit the working force to the cam follower 30, therefore the working force is not transmitted to the finger F caught under the press cylinder 5, and safety is ensured.

Embodiments of the grooved cam mechanism of the present invention and the pressing apparatus using such a grooved cam mechanism are not confined to that represented by Example 1. The form factors of the grooved cam mechanism may be modified so as to match the method or purpose of the use. The means of linking the grooved cam 10 and the press cylinder 5 can also take the various forms that exist in current equipment.

The intermittently rotating clutch 50 also does not have to be of the type described in Example 1. Various types of existent intermittently rotating clutches can be used. Instead of the mechanical means using the linkage described above, the linkage between the cam follower 30 of the grooved cam 10 and the safety lever 57 of the intermittently rotating clutch 50 can also take a form that employs an electrical means. When a foreign object such as a finger F exists under the press cylinder 5, the lowering of the press cylinder 5 is obstructed and the cam follower 30 stops without moving by a prescribed amount. This is communicated to the emergency-stop means of the intermittently rotating clutch 50 via an electrical means so as to immediately stop the press cylinder 5. In one such example, when the press cylinder 5 moves by a certain amount, the cam follower 30 moves in the direction of pushing, and this turns on the switch of a solenoid that engages or disengages the safety lever 57 of the intermittently rotating clutch 50, thereby releasing the safety apparatus. This also applies in the following examples described below.

### Example 2

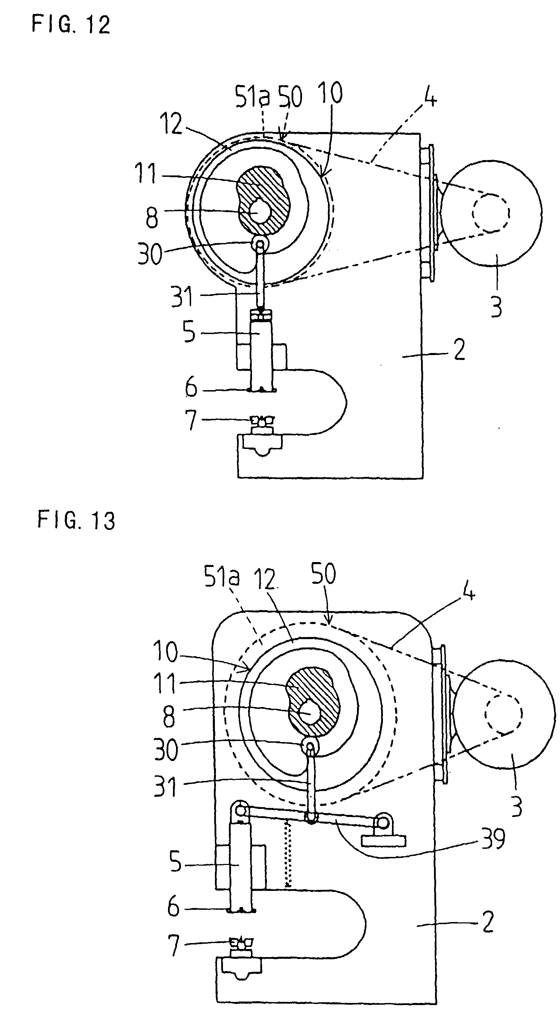

An eyelet-stamping machine according to Example 2 of the present invention will now be explained with reference to FIG. 12, which is a cross sectional view of the eyelet-stamping machine according to Example 2. Where reference is made in the following description to components not referenced in the relevant figure, these components will correspond to components which have already been described with reference to preceding figures. A main drive shaft 8 on which an intermittently rotating clutch 50 and a grooved cam 10 are axially mounted is horizontally and axially supported on a apparatus base 2. A motor 3 is installed behind said main drive shaft 8 and linked to the intermittently rotating clutch 50 via a drive belt 4. A press cylinder 5 provided with an upper die 6 is linked directly to the grooved cam 10 via a follower link 31. When the activation switch is turned on, the driving force of the motor 3 is transmitted to the grooved cam 10, and the grooved cam 10 makes one revolution. This causes the press cylinder 5 to make a vertically reciprocal motion. The eyelet is then tightened and fastened between the upper die and a lower die 7 fastened on a base 1.

A safety-lever link 58 linked via the first rod 59a and the second rod 59b to a safety lever 57 for immediately stopping the intermittently rotating clutch 50 is connected to said follower cam 31 (not illustrated in the drawing). The safety lever 57 and the intermittently rotating clutch 50 are engaged or disengaged according to the movement of the follower link 31.

The grooved cam 10 comprises an internal cam 11 and an external cam 12 as in the case of Example 1, and their shapes are also the same as those used in Example 1. The follower link 31 linked to the cam follower 30 which engages with the grooved cam 10 is controlled so as to convert the rotary motion of the grooved cam 10 into a vertical reciprocal motion of pushing and retreating. Because the follower link 31 is downwardly energised by the energising force of a spring, when the cam follower 30 is in the floating space and no load is applied to the press cylinder 5, the press cylinder 5 is at the bottom dead point. The internal cam 11 of the grooved cam 10 will then apply a working force to the press cylinder 5 to tighten and fasten the eyelet.

When the worker's finger F is under the press cylinder 5, the press cylinder falls down on the finger F, but at this time, the press cylinder 5 is energised only by the spring, so it stops at the moment it touches the finger F, and the cam follower 30 disengages from the external cam 12 and is pushed back to the floating range 14. Then the safety lever 57 cuts off the transmission of the driving force of the intermittently rotating clutch 50 and immediately stops the press cylinder 5. Therefore, there is no danger that the press cylinder 5 crushes the finger F, etc.

### Example 3

An eyelet-stamping machine according to Example 3 of the present invention will now be explained with reference to FIG. 13, which is a cross sectional view of the eyelet-stamping machine according to Example 3. Where reference is made in the following description to components not referenced in the relevant figure, these components will correspond to components which have already been described with reference to preceding figures. A main drive shaft 8 on which an intermittently rotating clutch 50 and a grooved cam 10 are axially mounted is horizontally and axially supported on a apparatus base 2. A motor 3 is installed behind said main drive shaft 8 and linked to the intermittently rotating clutch 50 via a drive belt 4. A press cylinder 5 provided with an upper die 6 is linked to one end of a lever 39. The other end of the lever 39 is rockably fastened to the apparatus base 2, and a follower link 31 is linked to the middle part of the lever 39. When the activation switch is turned on, the intermittently rotating clutch 50 engages and transmits the driving force of the motor 3 to the grooved cam 10, and the grooved cam 10 makes one revolution. This causes the press cylinder 5 to make a vertically reciprocal motion. The eyelet is then tightened and fastened between the upper die and a lower die 7 fastened on a base 1.

A safety-lever link 58 linked via the first rod 59a and the second rod 59b to a safety lever 57 for immediately stopping the intermittently rotating clutch 50 is connected to said follower cam 31 (not illustrated in the drawing). The safety lever 57 and the intermittently rotating clutch 50 are engaged or disengaged according to the movement of the follower link 31.

The grooved cam has the same configuration as that used in Example 1. The follower link 31 coupled to the cam follower 30 which engages with the grooved cam 10 is controlled so as to convert the rotary motion of the grooved cam 10 into a vertical reciprocal motion of pushing and retreating. Because the press cylinder 5 energises the follower link 31 in the direction of pushing via a press-cylinder-lowering lever 37, when the cam follower 30 is in the floating space and no load is applied to the press cylinder 5, the press cylinder 5 is at the bottom dead point.

Therefore, the cam follower 30 is always in contact with the external cam surface 12a even when it is in the floating range 14 of the grooved cam 10. But if a foreign object such as a finger F is caught under the press cylinder 5 and the lowering of the press cylinder 5 is obstructed, the cam follower 30 leaves the external cam 12 and is pushed back to the floating range 14. Then the safety lever 57 cuts off the transmission of the driving force of the intermittently rotating clutch 50, immediately stopping the press cylinder 5.

### Example 4

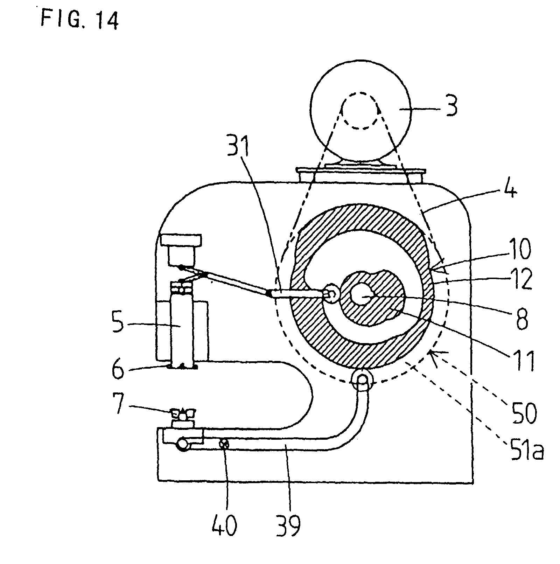

An eyelet-stamping machine according to Example 4 of the present invention will now be explained with reference to FIG. 14, which is a cross sectional view of the eyelet-stamping machine according to Example 4. Where reference is made in the following description to components not referenced in the relevant figure, these components will correspond to components which have already been described with reference to preceding figures. A main drive shaft 8 on which an intermittently rotating clutch 50 and a grooved cam 10 are axially mounted is horizontally and axially supported on a apparatus base 2. A motor 3 is installed above the main drive shaft 8 and coupled to the intermittently rotating clutch 50 via a driving belt 4. A press cylinder 5 provided with an upper die 6 is coupled to the grooved cam 10 via a toggle joint.

A portion of the circumferential surface of the grooved cam 10 corresponding to the floating range is raised in a cam shape. A lever 39 equipped with a cam follower 30 that makes contact with the external surface of the grooved cam 10 at one end and a lower die 7 at the other end is supported at a fulcrum 40 which is located below the grooved cam 10. The lever 39 with the lower die 7 is interlocked with the press cylinder 5 to tighten and fasten an eyelet.

A safety-lever link 58 linked via the first rod 59a and the second rod 59b to a safety lever 57 for immediately stopping the intermittently rotating clutch 50 is connected to said follower cam 31 (not illustrated in the drawing). The safety lever 57 and the intermittently rotating clutch 50 are engaged or disengaged according to the movement of the follower link 31.

The follower link 31 coupled to the cam follower 30 which engages with the grooved cam 10 is controlled so as to convert the rotary motion of the grooved cam 10 into a vertical reciprocal motion of pushing and retreating. Because the press cylinder 5 energises the follower link 31 in the direction of pushing via a press-cylinder-lowering lever 37, when the cam follower 30 is in the floating space and no load is applied to the press cylinder 5, the press cylinder 5 is at the bottom dead point.

Therefore, the cam follower 30 is always in contact with the external cam surface 12a even when it is in the floating range 14 of the grooved cam 10. But if a foreign object such as a finger F is caught under the press cylinder 5 and the lowering of the press cylinder 5 is obstructed, the cam follower 30 leaves the external cam 12 and is pushed back to the floating range 14. Then the safety lever 57 cuts off the transmission of the driving force of the intermittently rotating clutch 50, immediately stopping the press cylinder 5.

## Claims

1. A cam mechanism in which a cam follower (30) engages an endless guide groove (13) to impart a reciprocal movement to a follower link (31) coupled to the cam follower (30);
characterised in that said guide groove (13) comprises a restraining region (14) in which the cam follower (30) is guided in a restrained condition and a floating region (15) in which the cam follower (30) is guided in such a way that it has an extent of unrestrained movement in the direction that the follower link (31) reciprocates.

2. A cam mechanism according to Claim 1, in which the cam follower (30) when in the floating region (15) of the guide groove (13) is biased towards contact with one side of the guide groove (13).

3. A cam mechanism according to Claim 1 or 2 in which the guide groove (13) is defined between an inner cam surface formed on an inner cam (11) and an outer cam surface (12a) formed on an outer cam (12).

4. A cam mechanism according to Claim 3, in which the inner cam (11) has a working part (19) at which the radius of the inner cam is largest, and the cam follower (30) when in the floating region (15) is biased towards contact with the outer cam surface (12a); in which the floating region (15) of the guide groove (13) is established between the inner cam surface of the inner cam (11) and the outer cam surface (12a) of the outer cam (12), in a first part of the travel of the working part (19); and in which in a later part of the travel of the working part (19), a radius of the outer cam surface (12a) diminishes so as to return the cam follower (30) towards a centre of rotation of the cams (11, 12).

5. A cam mechanism according to Claim 4 adapted for intermittent rotary movement, in which an intermittently rotating clutch (50), which transmits a driving force by intermittent rotation, is coupled with the cams (11, 12), and in which when the cam follower (30) reaches a prescribed position while urged against the outer cam surface (12a), an emergency stop means (55) of the rotating clutch (50) is released to allow the driving force to be transmitted, whereas when the cam follower (30) does not reach the prescribed position, the emergency stop means of the intermittently rotating clutch (50) is not released, so that further rotation is immediately stopped.

6. A pressing apparatus including a press cylinder (5) for performing a pressing operation, linked to a cam mechanism according to Claim 5 by a linkage such that the said driving force rotates the cams (11, 12) via the intermittently rotating clutch (50) and activates the press cylinder (5) to perform the press operation, in which when the cam follower (30) is in the floating region (15) a power is applied to the linkage to move the press cylinder to a prescribed position and the emergency stop means (55) of the intermittently rotating clutch (50) coupled with the linkage is released to apply a pressing force to the press cylinder (5), whereas when the press cylinder (5) does move to the prescribed position because of an external blocking force, the emergency stop means of the intermittently rotating clutch (50) is not released, and the movement of the press cylinder (5) is stopped.

7. A grooved cam mechanism in which a cam follower (30) engages an endlessly formed guide groove (13) to impart a reciprocal movement to a follower link (31), characterised in that said guide groove (13) comprises a restraining range (14) in which the cam follower (30) is guided in a restrained condition and a floating range (15) in which the cam follower (30) is guided in such a way that it can float freely in the direction that the follower link (31) reciprocates.

8. A grooved cam mechanism according to Claim 7 characterised in that the cam follower (30) in the floating range (15) of the guide groove (13) makes contact with an external cam surface (12a), rather than with the surface of an internal cam (11) which forms the guide groove (13) together with the external cam, by means of a pressing and energising means.

9. A grooved cam mechanism according to Claim 7 or 8, characterised in that the floating range (15), in which the cam follower (30) can float freely in the direction that the follower link (31) reciprocates, is established in the first part of the travel of a working part (19), i.e., the part of the internal cam (11) where the radius is the largest, between the internal cam (11) and the external cam (12), and in the latter part of the travel of the working part (19), the radius of the external cam (12) diminishes so as to return the cam follower (30) towards the centre of the grooved cam.

10. A grooved cam mechanism for intermittent rotary movement characterised in that an intermittently rotating clutch (50), which transmits the driving force as an intermittent rotation, is interlocked with the grooved cam formed of the endlessly formed guide groove (13) comprising the restraining range (14) and the floating range (15), and that when the cam follower (30) in the floating range (15) of the guide groove (13) is pushed by means of a pressing and energising means to the external cam surface (12a), rather than to the surface of the internal cam (11) which forms the guide groove (13) together with the external cam (12), and moves to a prescribed position, an emergency stop means of the intermittently rotating clutch (50) interlocked with the cam follower (30) via a mechanical or electrical means is released to transmit the driving force to the grooved cam, whereas when the cam follower (30) does not move to the prescribed position, the emergency stop means of the intermittently rotating clutch (50) is not released, so the rotation of the grooved cam is immediately stopped.

11. A pressing apparatus comprising the grooved cam (10) and a press cylinder (5) linked by a linkage, in which the driving force rotates the grooved cam (10) via the intermittently rotating clutch, thereby activating the press cylinder (5) to perform the press operation, characterised in that the guide groove (13) is formed of the restraining range (14) and the floating range (15), and when the cam follower (30) is in the floating range (15) and the pressing and energising means applies power to the linkage to move the press cylinder (5) to a prescribed position, the emergency stop means of the intermittently rotating clutch (50) interlocked with the linkage via a mechanical or electrical means is released to apply a pressing force to the press cylinder (5), whereas when the press cylinder (5) does not move to the prescribed position because of an external blocking force, the emergency stop means of the intermittently rotating clutch (50) is not released, so the movement of the press cylinder (5) is immediately stopped.
